# FASCICULE DE BREVET EUROPEEN

(11) **EP 2 809 546 B1**
(45) Date de publication et mention de la délivrance du brevet: **22.07.2020**
(21) Numéro de dépôt: 13702035.0
(22) Date de dépôt: 30.01.2013
(51) Int. Cl.: F21S 43/19, F21S 43/33, F21S 43/14, B60Q 1/00, B60Q 1/26, G02B 6/00, G02B 17/00, F21V 7/00, F21V 8/00

(54) **DISPOSITIF D'ECLAIRAGE A LED AVEC SYSTEME DIFFUSEUR**
LED-BELEUCHTUNGSVORRICHTUNG MIT EINEM DIFFUSORSYSTEM
LED LIGHTING DEVICE INCLUDING A DIFFUSER SYSTEM

(30) Priorité: 31.01.2012 FR 1200281
(43) Date de publication de la demande: 10.12.2014
(73) Titulaire: Marelli Automotive Lighting France, 89330 Saint-Julien-du-Sault (FR)
(72) Inventeur: BUISSON, Alain, F-78190 Trappes (FR)
(74) Mandataire: Jacobacci Coralis Harle
(86) Numéro de dépôt international: PCT/EP2013/051738
(87) Numéro de publication internationale: WO 2013/113727

(56) Documents cités:
- WO-A1-2011/019753
- DE-A1- 10 258 536
- GB-A- 2 190 735
- GB-A- 2 479 142
- JP-A- 2005 158 490
- US-A1- 2005 207 177
- US-A1- 2010 073 956
- US-A1- 2011 317 442
- US-B1- 6 527 411
- US-B1- 6 837 602

## Description

La présente invention concerne le domaine de l'éclairage et de la signalisation, notamment pour les véhicules automobiles. Elle concerne plus particulièrement un dispositif d'éclairage ayant plusieurs LED comme sources lumineuses, et dans lequel la diffusion spatiale de la lumière émise est améliorée.

La réglementation en vigueur impose, selon les types de véhicules, différents feux d'éclairage ou de signalisation. Mais, outre le volume de l'ensemble des feux, les performances et l'uniformité d'éclairement des feux individuels ainsi regroupés sont des préoccupations majeures.

On connaît déjà dans l'art antérieur des écrans auxiliaires transparents dans lesquels peut se propager la lumière émise par une source de lumière auxiliaire, ces écrans étant destinés à équiper un feu, notamment arrière, d'un véhicule automobile. Des discontinuités locales prévues dans le matériau de l'écran constituent des foyers de diffusion de la lumière hors de ces écrans (voir publication de brevet français FR 2 868 506 A1).

Le document JP 2005 158490 A décrit un dispositif d'éclairage comprenant un canal annulaire défini par deux parois cylindriques. Ce dispositif d'éclairage est réservé à un usage très spécifique qui est l'éclairage d'objets destinés à être photographiés.

Le document GB 2 479 142 A décrit un dispositif d'illumination à usage domestique ou professionnel comprenant des sources lumineuses disposées à l'entrée d'un canal formé par les ailettes d'un radiateur. Dans la demande de brevet allemand DE 101 01 795 sont décrits des feux clignotants, notamment des clignotants avant pour véhicules automobiles, dans lesquels une source de lumière auxiliaire pour feu de position illumine un élément disposé transversalement dans l'espace entre le feu principal et la glace frontale, et procure à travers celle-ci un éclairement de même direction que celle du feu principal.

Dans la demande de brevet français publiée sous le numéro FR 2 819 040 A1, est décrit un composant d'optique ou de style pour l'éclairage ou la signalisation de véhicules automobiles. Ce composant est en matériau transparent, à l'intérieur duquel des foyers de diffusion de la lumière sont situés uniquement en des endroits prédéterminés pour diffuser la lumière émise par une source associée au dispositif d'éclairage ou de signalisation concerné. Ce composant peut constituer la glace d'un projecteur de véhicule automobile, ou un insert placé dans un tel projecteur.

Dans la demande de brevet allemand DE 103 11 317 est décrit un dispositif d'éclairage pour véhicule comportant un guide de lumière comprenant des structures de diffusion situées essentiellement au foyer de surfaces réfléchissantes qui laissent ainsi diffuser un éclairement homogène.

La demanderesse a également conçu, et a décrit dans la demande de brevet publiée sous le FR 2953781 A1, un nouveau dispositif pour feu de véhicule automobile, comportant un matériau optique transparent et au moins une source de lumière de type LED agencée pour émettre des rayons lumineux se propageant à l'intérieur de l'épaisseur dudit matériau optique transparent, qui comprend essentiellement:
- une plaque d'un matériau optique transparent formant rideau,
- ladite plaque comportant au moins un renflement allongé bilatéral, de section droite globale substantiellement circulaire, ayant son axe longitudinal moyen dans le plan moyen de ladite plaque et apte à former un guide de lumière, et
- au moins une LED placée à au moins l'une des extrémités dudit guide de lumière, avec son axe principal orthogonal à l'axe longitudinal dudit guide de lumière.

Dans ces diverses applications et ces divers modes de réalisation d'écrans lumineux diffusant la lumière émise par au moins une LED, il peut apparaître des inhomogénéités dans la lumière diffusée, en particulier au niveau des guides dont peuvent être munis les rideaux ou écrans diffuseurs.

Quant à l'éclairage direct par des LED de forte ou de moyenne puissance, il est désormais reconnu qu'il est aveuglant et ne devrait pas être généralisé sous cette forme.

Il est donc apparu utile de chercher à uniformiser le rendu lumineux des dispositifs d'éclairage et/ou à en masquer les éventuelles inhomogénéités.

La présente invention vise à procurer un moyen pour fournir un éclairage ayant un rendu plus homogène et apportant aux utilisateurs un rendu beaucoup moins fatigant ou moins aveuglant que les éclairages par LED actuellement commercialisés.

La présente invention est définie dans la revendication 1 et dans les revendications dépendantes.

Le nouveau dispositif d'éclairage selon l'invention, notamment destiné, mais sans que cela soit limitatif, à un feu de signalisation et/ou à l'éclairage extérieur ou intérieur d'ambiance de l'habitacle de véhicules automobiles, comporte des LED, avantageusement fixées sur PCB (abréviation classique pour plaquettes à circuits imprimés), sensiblement perpendiculairement auxquelles est placé, en avant de la face éclairante de la LED, un système comprenant des plaques parallèles dont au moins l'une des faces est de couleur claire, de préférence de couleur blanche, tandis que ledit système comporte avantageusement:
- au moins une LED, de préférence plusieurs LED réparties selon une ligne de forme quelconque sur une plaquette de circuits imprimés (en abrégé un PCB, pour "Printed Circuit Board"),
- au moins deux plaques parallèles entre elles, composées d'un matériau opaque formant paroi, prenant appui sur ledit PCB et/ou sur son pourtour, respectivement de part et d'autre d'au moins une LED portée par ledit PCB, de manière à définir un canal dans le fond duquel se trouvent distribuées lesdites LED, et se déployant sensiblement perpendiculairement au plan moyen dudit PCB de manière à canaliser la lumière émise par lesdites LED, qui s'échappe dudit dispositif par le côté desdites plaques opposé au côté susdit prenant appui sur ou autour du PCB,
tandis que le dispositif est orienté pour que les LED émettent la lumière dans ledit canal, et tandis que le dispositif comporte, en option, une zone de largeur supérieure ou zone évasée à son extrémité libre, par laquelle sort du dispositif la lumière émise par les LED quand celles-ci sont allumées au moyen d'une alimentation électrique et des éléments de circuit appropriés, qui complètent fonctionnellement le dispositif selon l'invention.

Bien que le dispositif selon l'invention puisse être de forme et de taille quelconques, il sera décrit dans la suite en référence à un dispositif formant feu d'éclairage, de balisage et/ou de signalisation pour véhicules automobiles, et en référence à un exemple de réalisation dans lequel les parois opaques susdites sont des tranches de cylindres creux au nombre de deux, de rayons respectifs R et r, disposées parallèlement l'une à l'autre, de manière concentrique, et prenant appui sur un PCB sur lequel sont placées n LED, régulièrement ou irrégulièrement espacées l'une de l'autre, tandis que lesdites LED sont disposées de manière à émettre un faisceau lumineux dirigé sensiblement diamétralement dans le couloir de largeur R-r ainsi défini par les plaques opaques susdites.

Dans la pratique, les parois opaques peuvent définir un canal ou couloir annulaire de forme non seulement circulaire, mais encore quadrangulaire, polygonale, ou autres, régulières ou non., ou encore un canal linéaire ou sinueux. Dans ce dernier cas, les parois possèdent des courbures identiques ou homothétiques, de sens de courbure alternés et avec des parties planes intercalées.

Dans une forme de réalisation préférée, les LED sont disposées de manière sensiblement régulière selon une figure géométrique telle que, par exemple, un cercle, sur un substrat de type PCB.

L'invention sera mieux comprise, et d'autres objectifs, avantages et caractéristiques de celle-ci apparaîtront plus clairement à la lumière de la description détaillée ci-après d'une forme de réalisation ayant valeur d'exemple illustratif, et de modes de réalisation alternatifs ou optionnels.

Le dispositif selon l'invention procure ses meilleurs résultats en terme de diffusion et de dispersion de la lumière des LED lorsque l'on place les LED ou le PCB portant les LED sous un angle allant jusqu'à environ 20°, et de préférence d'environ 15°, par rapport par rapport au plan de section transversale des dites plaques formant canal pour la lumière des LED.

On a pu constater qu'ainsi la lumière émise par les LED se réfléchit sur les parois internes du canal défini entre deux plaques opaques et se diffuse/disperse avant de s'acheminer vers la sortie du canal d'où elle est visible par un observateur convenablement placé dans un champ de vision approprié.

Les modes de réalisation décrits ci-après sont fournis à titre purement illustratif et non-limitatif, notamment en référence aux planches de dessins annexées dans lesquelles:
Fig. 1 représente une vue schématique de face, en élévation, d'un dispositif d'éclairage selon l'invention, sur un socle; et
Fig. 2 représente une vue schématique en coupe transversale suivant A-A du dispositif d'éclairage selon Fig. 1.

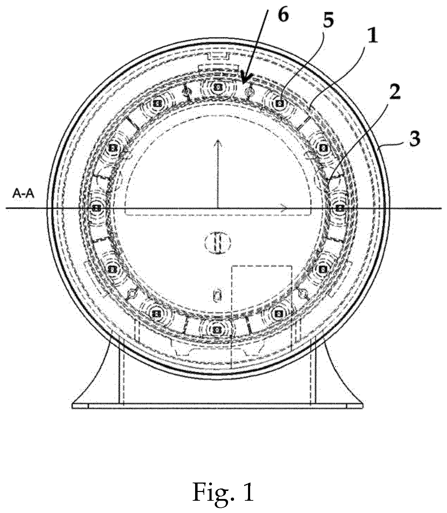

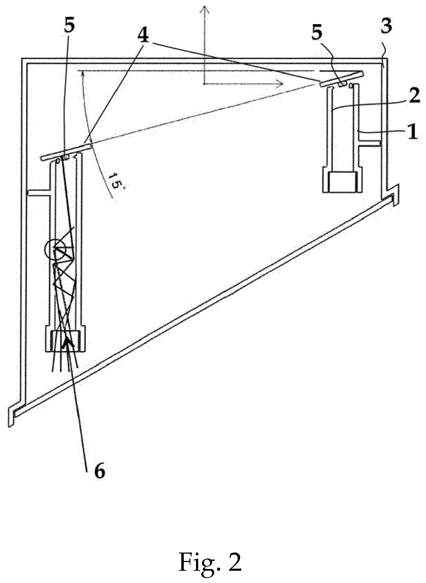

Comme le montrent les Figs. 1 et 2 dans la forme de réalisation qui y est représentée, le dispositif d'éclairage selon l'invention peut comprendre un système de tubes concentriques 1, 2 fixés de manière appropriée à l'intérieur d'un boîtier 3, et fixés sur un socle dans l'exemple illustratif représenté. Dans la pratique, le socle peut être un élément de carrosserie ou de structure d'un véhicule automobile, par exemple.

Dans le fond dudit boîtier est placée une plaquette de circuits imprimés (PCB) 4 comportant des LED 5.

Pour être opérationnel, un tel dispositif est agencé pour être raccordé à une source de courant électrique appropriée.

Comme on peut le voir d'après la Fig. 2, les LED sont avantageusement disposées sous un angle, par exemple d'environ 15°, par rapport au plan transversal des parois formant canal. Leur faisceau lumineux se réfléchit ainsi un maximum de fois sur les parois de ladite couronne.

Le dispositif objet de la présente l'invention peut comporter, séparément ou en combinaison, des caractéristiques optionnelles ou alternatives, telles que notamment:
- la plaquette de LED est de géométrie circulaire, avec les n LED (où n est un entier de 4 à 20, de préférence égal à 12) disposées sur son pourtour, de préférence à des distances sensiblement identiques entre deux LED consécutives;
- les LED sont fixées sur une plaquette, sur la face avant de laquelle le tube susdit est disposé en avant de ladite plaquette de LED, avantageusement de telle manière que son axe longitudinal soit perpendiculaire au plan de ladite plaquette;
- au moins la face interne des plaques opaques est constituée d'un matériau de couleur blanche et/ou est tapissée d'un revêtement de couleur blanche
- ladite face interne des plaques opaques, c'est-à-dire la face tournée vers l'intérieur du canal qu'elles définissent pour les LED concernées, est de préférence garnie de rugosités. Une telle paroi rugueuse disperse mieux la lumière des LED;
- pour compenser le fait qu'une faible portion du faisceau lumineux des LED peut se trouver atténuée ou perdue par des réflexions non souhaitées ou n'aboutissant pas vers la sortie du canal, il est prévu d'utiliser des LED ayant un flux lumineux maximal plus élevé que les LED actuellement utilisées dans des dispositifs non pourvus de cette canalisation de lumière, par exemple en remplaçant les LED de 20 lumens par des LED de 40 lumens;
- le rapport de la longueur au diamètre dudit tube (hormis la partie terminale renflée) se situe avantageusement dans l'intervalle de 3 à 10, de préférence de 4 à 7, et plus préférablement de 5 environ;
- la largeur du canal entre deux plaques opaques parallèles est de préférence d'environ 10 à 15 mm;
- l'axe d'émission de la lumière est avantageusement parallèle à l'axe appelé classiquement axe X du véhicule;
- la fixation dudit système de canalisation dans l'axe du faisceau principal issu desdites LED s'effectue au moyen d'une fixation appropriée sur la paroi d'un module circulaire porteur des n LED susdites;
- ledit module porteur de LED peut avoir une face avant dont le plan principal est en biais par rapport à l'axe longitudinal dudit système tubulaire;
- l'alimentation des plaquettes de LED en courant électrique s'effectue par des moyens classiques, connus de l'homme du métier.

Un autre objet de l'invention est constitué par un véhicule automobile équipé d'au moins un dispositif tel que décrit ici.

Dans un tel dispositif, les LED émettent des rayons qui sont pour l'essentiel réfléchis sur la paroi interne desdits tubes; après des réflexions successives d'un même rayon lumineux, celui-ci a acquis une largeur et une homogénéité de faisceau qui font qu'il donne, pour l'oeil humain situé en regard de la sortie desdits tubes, un rayonnement lumineux qui reste puissant, mais est nettement plus homogène et moins aveuglant que le rayonnement émis à l'origine par un même ensemble de LED non équipé du dispositif selon l'invention.

Un évasement terminal 6 desdits tubes est optionnel; il permet d'augmenter la largeur et la luminosité du faisceau quittant ledit tube, et ainsi de donner audit faisceau de rayons lumineux quittant ledit tube une largeur doublée d'une homogénéité exceptionnelles, inhabituelles dans l'état actuel des connaissances de l'homme du métier et des réalisations que celui-ci peut en inférer.

Le diamètre du module susdit peut se situer, par exemple, entre environ 10 et 15 centimètres pour un dispositif d'éclairage principal, tel que par exemple un feu arrière de véhicule automobile.

Pour des applications au domaine de l'automobile, l'homme du métier comprendra que le dispositif selon l'invention se place en pratique aux endroits habituels de la carrosserie des véhicules automobiles. De manière plus générale, ledit dispositif peut également être utilisé, avec les adaptations de taille et de configuration appropriées, à l'intérieur de l'habitacle des véhicules automobiles.

## Revendications

1. Dispositif d'éclairage, pour véhicule automobile, comportant des LED fixées sur une face avant d'une plaque de circuits imprimés ou PCB, et un système de canalisation de la lumière placé en avant des faces éclairantes des LED, **caractérisé en ce que** le système de canalisation de la lumière comprend au moins un canal annulaire défini par deux parois parallèles cylindriques opaques (1, 2), dont au moins l'une des faces orientées vers l'intérieur du canal annulaire est de couleur blanche, et lesdites parois prennent appui sur la plaque de circuits imprimés et/ou sur son pourtour, respectivement de part et d'autre des LED portées par la plaque de circuits imprimés et situées au niveau d'un fond du canal annulaire, la lumière émise par les LED s'échappant du canal annulaire par une extrémité libre à l'opposé du fond, et **en ce que** la face avant de la plaque de circuits imprimés forme un angle par rapport au plan de section transversale du canal annulaire, ledit angle allant jusqu'à 20° et étant de préférence d'environ 15°.

2. Dispositif selon la revendication 1, **caractérisé en ce que** la face des parois opaques (1, 2) tournée vers l'intérieur du canal est garnie de rugosités.

3. Dispositif selon la revendication 1 ou 2, **caractérisé en ce que** la face avant de la plaque de circuits imprimés est en biais par rapport à l'axe longitudinal du canal annulaire.

4. Dispositif selon l'une quelconque des revendications 1 à 3, **caractérisé en ce que** le canal annulaire présente une largeur d'environ 10 à 15 mm.

5. Dispositif selon l'une quelconque des revendications 1 à 4, **caractérisé en ce que** le canal annulaire comporte en outre une zone de largeur supérieure ou zone évasée à son extrémité libre, par laquelle sort la lumière émise par les LED (5) quand celles-ci sont allumées.

6. Dispositif selon l'une quelconque des revendications 1 à 5, **caractérisé en ce que** le canal annulaire possède une forme circulaire, quadrangulaire, polygonale régulière ou non, ou encore un canal linéaire ou sinueux.

7. Dispositif selon l'une quelconque des revendications 1 à 6, **caractérisé en ce que** les parois opaques (1, 2) forment un ensemble de tubes concentriques.

8. Dispositif selon la revendication 7, **caractérisé en ce que** lesdits tubes concentriques sont fixés à l'intérieur d'un boîtier (3).

9. Dispositif selon l'une quelconque des revendications 1 à 8, **caractérisé en ce que** la plaque de circuits imprimés est de géométrie circulaire, tandis que les n LED, où n est un entier de 4 à 20, de préférence égal à 12, sont disposées sur son pourtour, de préférence à des distances sensiblement identiques entre deux LED (5) consécutives.

10. Véhicule automobile équipé d'au moins un dispositif selon l'une quelconque des revendications 1 à 9.

## Patentansprüche

1. Beleuchtungsvorrichtung für ein Motorfahrzeug, die auf einer Vorderseite einer gedruckten Schaltung oder PCB befestigte Leuchtdioden und ein vor den leuchtenden Seiten der Leuchtdioden angeordnetes System zum Kanalisieren des Lichts aufweist, **dadurch gekennzeichnet, daß** das System zum Kanalisieren des Lichts wenigstens einen ringförmigen Kanal aufweist, der durch zwei parallele zylindrische lichtundurchlässige Wandungen (1, 2) definiert ist, von denen wenigstens eine der zum Inneren des ringförmigen Kanals hin gerichteten Seiten von weißer Farbe ist und die Wandungen auf der gedruckten Schaltung und/oder deren Umfang je auf einer Seite der von der gedruckten Schaltung getragenen und im Bereich eines Bodens des ringförmigen Kanals gelegenen Leuchtdioden aufliegen, wobei das von den Leuchtdioden abgegebene Licht an einem freien, dem Boden entgegengesetzten Ende aus dem ringförmigen Kanal austritt, und daß die Vorderseite der gedruckten Schaltung gegenüber der Querschnittsebene des ringförmigen Kanals einen Winkel bildet, wobei der Winkel bis zu 20° beträgt und vorzugsweise etwa 15° ist.

2. Vorrichtung gemäß Anspruch 1, **dadurch gekennzeichnet, daß** die zum Inneren des Kanals hin gerichtete Seite der lichtundurchlässigen Wände (1, 2) mit Unebenheiten versehen ist.

3. Vorrichtung gemäß Anspruch 1 oder 2, **dadurch gekennzeichnet, daß** die Vorderseite der gedruckten Schaltung gegenüber der Längsachse des ringförmigen Kanals schräg angeordnet ist.

4. Vorrichtung gemäß einem der Ansprüche 1 bis 3, **dadurch gekennzeichnet, daß** der ringförmige Kanal eine Breite von ungefähr 10 bis 15 mm aufweist.

5. Vorrichtung gemäß einem der Ansprüche 1 bis 4, **dadurch gekennzeichnet, daß** der ringförmige Kanal außerdem einen Bereich größerer Breite oder einen an seinem freien Ende aufgeweiteten Bereich aufweist, aus dem das von den Leuchtdioden (5) abgegebene Licht austritt, wenn diese eingeschaltet sind.

6. Vorrichtung gemäß einem der Ansprüche 1 bis 5, **dadurch gekennzeichnet, daß** der ringförmige Kanal eine kreisförmige, viereckige, regelmäßig oder unregelmäßig polygonale Form oder auch einen linearen oder gewundenen Kanal aufweist.

7. Vorrichtung gemäß einem der Ansprüche 1 bis 6, **dadurch gekennzeichnet, daß** die lichtundurchlässigen Wandungen (1, 2) eine Gesamtheit konzentrischer Rohre bilden.

8. Vorrichtung gemäß Anspruch 7, **dadurch gekennzeichnet, daß** die konzentrischen Rohre im Inneren eines Gehäuses (3) befestigt sind.

9. Vorrichtung gemäß einem der Ansprüche 1 bis 8, **dadurch gekennzeichnet, daß** die gedruckte Schaltung von kreisförmiger Geometrie ist, während die n Leuchtdioden, wobei n eine ganze Zahl von 4 bis 20, vorzugsweise gleich 12, ist, an deren Umfang angeordnet sind, vorzugsweise mit im Wesentlichen gleichen Abständen zwischen zwei aufeinanderfolgenden Leuchtdioden (5).

10. Motorfahrzeug, das mit wenigstens einer Vorrichtung gemäß einem der Ansprüche 1 bis 9 ausgestattet ist.

## Claims

1. A lighting device, in particular for a motor vehicle, comprising LEDs fixed on a front face of a printed circuit board or PCB, and a channel system of light placed in front of the illuminating face of the LED, **characterized in that** the channel system comprises at least one annular channel define by two hollow cylinders parallel plates (1,2), with at least one of face oriented toward inside annular channel is white-colored, and said plates resting on the printed circuit board and/or on the periphery thereof, on each side of the LEDs borne by the printed circuit board and positioned at the level of the annular channel bottom, the light emitted by the LED leaves the annular channel by a free end opposite to the bottom, and the front face of the front plate of the printed circuit board forms an angle with a sectional plan of annular channel, said angle goes up to 20°, ad preferably of about 35°.

2. Device as claimed in claim 1, **characterized in that** surface of the plates (1,2) facing the inside of the channel is provided with rough spots

3. Device as claimed in claim 1 or 2, **characterized in that** the front face of the front plate of the printed circuit board is angled relative to the longitudinal axis of annular channel.

4. Device as claimed in any one of claims 1 to 3, **characterized in that** the annular channel presents a width approximately 10 to 15 mm.

5. Device as claimed in any one of claims 1 to 4, **characterized in that** the annular channel comprises a wider zone or a flared zone at its free end, through which the light emitted by the LEDs (5) exits the device when the latter are illuminated.

6. Device as claimed in any one of claims 1 to 5, **characterized in that** the annular channel has a circular, quadrangular, regular or irregular polygonal shape or likewise a straight or sinuous channel.

7. Device as claimed in any one of claims 1 to 6, **characterized in that** the opaque plates forms a system of concentric tubes.

8. Device as claimed in claim 7, **characterized in that** the concentric tubes are fixed inside of a housing (3).

9. Device as claimed in any one of claims 1 to 8, **characterized in that** the printed circuit board has a circular geometry with n LEDs where n is an integer between 4 and 20, preferably equal to 12, arranged on its perimeter, preferably at essentially identical distances between two consecutive LEDs (5).

10. A motor vehicle equipped with at least one device as claimed in any one of claims 1 to 9.
